Europäisches Patentamt

European Patent Office

Office européen des brevets

(11) Numéro de publication: **0 275 597 B1**

(12) **FASCICULE DE BREVET EUROPEEN**

(45) Date de publication de fascicule du brevet:
16.10.91

(51) Int. Cl.5: **H04N 7/087**

(21) Numéro de dépôt: 87202556.4

(22) Date de dépôt: 17.12.87

(54) **Dispositif de réception de données numériques comportant un circuit de reconnaissance de début de paquet.**

(30) Priorité: 23.12.86 FR 8618052

(43) Date de publication de la demande:
27.07.88 Bulletin 88/30

(45) Mention de la délivrance du brevet:
16.10.91 Bulletin 91/42

(84) Etats contractants désignés:
DE FR GB

(56) Documents cités:
GB-A- 2 006 570
US-A- 3 903 356
US-A- 4 620 227

IEEE TRANSACTIONS ON CONSUMER ELEC-
TRONICS, vol. CE-32, no. 3, août 1986, pages
162-168, IEEE, New York, US; X. MEINDL et al.:
"Decoder IC for an automatic video program
identification system (VPS)"

IEEE TRANSACTIONS ON CONSUMER ELEC-
TRONICS, vol. CE-26, no. 3, août 1980, pages
657-663, IEEE, New York, US; M. HIRASHIMA
et al.: "Teletext receiver. A circuit design of
the sampling clock regernation"

(73) Titulaire: PHILIPS COMPOSANTS
117, quai du Président Roosevelt
F-92130 Issy les Moulineaux(FR)

(84) Etats contractants désignés:
FR

Titulaire: N.V. Philips' Gloeilampenfabrieken
Groenewoudseweg 1
NL-5621 BA Eindhoven(NL)

(84) Etats contractants désignés:
DE GB

(72) Inventeur: Guenot, André
SOCIETE CIVILE S.P.I.D. 209, rue de l'Université
F-75007 Paris(FR)
Inventeur: Cantou, Christian
SOCIETE CIVILE S.P.I.D. 209, rue de l'Université
F-75007 Paris(FR)

Il est rappelé que: Dans un délai de neuf mois à compter de la date de publication de la mention de la
délivrance du brevet européen, toute personne peut faire opposition au brevet européen délivré, auprès de
l'Office européen des brevets. L'opposition doit être formée par écrit et motivée. Elle n'est réputée formée
qu'après paiement de la taxe d'opposition (art. 99(1) Convention sur le brevet européen).

FUNKSCHAU, vol. 49, no. 19, septembre 1977, pages 62-67, Munich, DE; D. EATON et al.: "Die Grundlagen von Teletext und Viewdata"

(74) Mandataire: **Pinchon, Pierre et al**
**Société Civile S.P.I.D. 156, Boulevard Haussmann**
**F-75008 Paris(FR)**

## Description

La présente invention concerne un dispositif de réception de données numériques transmises sous forme de paquets multiplexés dans la voie vidéo d'une émission de télévision, qui comporte notamment un démodulateur muni d'une horloge de données synchronisable à la réception d'une salve de synchronisation de bits constituée d'une suite de n bits alternativement 1 et 0, présente au début de chaque paquet de données après un signal de synchronisation de ligne, un démultiplexeur auquel peuvent être transmis les signaux de données et les signaux de l'horloge de données provenant du démodulateur, ainsi que des moyens pour exploiter les données notamment en vue d'une visualisation sur un écran, dispositif dans lequel, en outre, un circuit de reconnaissance de données est prévu pour autoriser au moyen d'un signal de reconnaissance, le transfert des données numériques vers le démultiplexeur dans le cas où le début d'un paquet de données a été reconnu.

Il est connu de transmettre des données numériques sous forme de paquets multiplexés dans la voie vidéo d'une émission de télévision, notamment en vue de l'affichage d'informations sur l'écran de réception. C'est le cas des systèmes connus sous le nom d'"ANTIOPE" en France, de "CEEFAX" en Grande-Bretagne ou encore "NABTS" aux Etats-Unis.

On sait que la transmission de données numériques pendant la durée normale de balayage d'une ligne de télévision débute par l'émission d'une salve de synchronisation de bits qui, pour les systèmes ANTIOPE, CEEFAX ou NABTS se présente sous la forme d'un mot de 16 bits qui est le même pour tous ces systèmes.

Par nature ce genre de transmission n'est pas bilatérale et il est donc nécessaire d'obtenir à la réception une identification la plus sûre possible du fait qu'une ligne de données numériques est présente et non pas une ligne de signal analogique vidéo qui posséderait fortuitement une certaine ressemblance avec un début d'émission de données numériques.

Dans ce but, il est connu de prévoir un circuit de reconnaissance de données qui a pour rôle de fournir le plus tôt possible au cours de la transmission correspondant à une ligne de télévision, un signal de reconnaissance qui autorise ou non le transfert des données numériques vers le démultiplexeur selon que cette ligne présente ou non, en début de réception, les éléments caractéristiques d'une salve de synchronisation de bits.

Un dispositif de réception de données numériques conforme au préambule est notamment connu du document FR-A-2 496 376.

En présence de signaux déformés et/ou bruités à la réception notamment lorsque la distance entre l'émetteur et le récepteur est élevée, les circuits de reconnaissance de données fonctionnent avec un certain taux d'erreurs de reconnaissance, ces erreurs pouvant consister soit en un rejet d'une ligne de données non reconnue, soit en la reconnaissance à tort d'une ligne de signal vidéo, en tant que ligne de données. Il est souhaitable à ce point de vue que le circuit de reconnaissance de données ait un fonctionnement à tolérance optimisée pour éviter un rejet excessif de lignes de données en présence de bruit, mais en conservant néanmoins une bonne sécurité contre la validation intempestive de lignes de signaux vidéo.

Si on cherche à réaliser un dispositif de réception de données numériques susceptible de traiter indifféremment des signaux émis sous des standards différents (par exemple ANTIOPE, CEEFAX ou NABTS), le circuit de reconnaissance de données devra également pouvoir s'adapter aux différences de spécifications et particulièrement aux tolérances prévues par les normes d'émission de ces systèmes.

La présente invention a pour but de proposer un dispositif de réception de données comportant un circuit de reconnaissance de données qui soit très performant en présence de signaux bruités à son entrée et qui soit également capable de s'adapter simplement en cas d'utilisation à la réception de standards différents.

Selon la présente invention un dispositif de réception de données numériques du genre indiqué en préambule est notamment remarquable en ce que le circuit de reconnaissance de données comporte une bascule D dite de retardement, une porte OU exclusif, un générateur de fenêtre temporelle et un module de contrôle synchrone, en ce que le signal de données issu du démodulateur est appliqué d'une part à l'entrée de données de la bascule D de retardement et d'autre part à l'une des entrées de la porte OU exclusif, en ce que le signal de sortie de la bascule D de retardement est appliqué à l'autre entrée de la porte OU exclusif, et en ce que le signal de sortie de la porte OU exclusif est transmis à l'entrée du module de contrôle synchrone qui mémorise une suite d'états déterminés de son entrée pendant le temps d'ouverture de la fenêtre temporelle, et fournit à sa sortie le signal de reconnaissance de début de paquets lorsque ladite suite d'états successifs est essentiellement une suite d'états 1 (états hauts).

Dès que l'horloge de données s'est synchronisée sur les premiers bits de la salve de synchronisation de bits, le signal de sortie de la porte OU exclusif présente, en synchronisme avec l'horloge de données, des états qui sont à 1 pour une réception de bits qui se succèdent en alternance régulière de 1 et 0. Dès lors le module de contrôle synchrone peut fournir en sortie un signal de reconnaissance de début de paquet qui est particulièrement sûr. Il suffit pour cela que ce module de contrôle, réalisable sous différentes formes, mémorise une suite d'états successifs de son entrée pendant l'intervalle de temps déterminé par l'ouverture de la fenêtre temporelle et délivre en sortie un signal d'autorisation à la condition que cette suite d'états successifs corresponde à une suite d'état, tous à 1 ou ne présentant qu'un nombre limité d'états à 0 parmi une majorité d'états à 1.

Il doit être entendu qu'en mentionnant par simplification une porte OU exclusif dont l'état à 1 en sortie est représentatif de la réception de données lorsque les bits de données sont alternés régulièrement, on entend désigner en fait tout montage équivalent effectuant la somme modulo 2 du signal de données et du même signal à la sortie de la bascule D de retardement.

Selon un premier mode de mise en oeuvre de l'invention, le dispositif de réception est caractérisé en ce que le générateur de fenêtre temporelle fournissant un signal d'ouverture d'une durée prédéterminée et positionnée à l'intérieur des limites de la salve de synchronisation de bits, le module de contrôle synchrone comporte une bascule D, dite de contrôle, initialisée à un premier état avant l'ouverture de la fenêtre temporelle et autoverrouillée dans l'état opposé dudit premier état, dès l'apparition d'un état bas en sortie de la porte OU exclusif survenant pendant l'ouverture de la fenêtre temporelle, le signal de sortie de la bascule D de contrôle étant prélevé lors de la fermeture de ladite fenêtre en tant que signal de reconnaissance de début de paquet.

La bascule D de contrôle est par exemple initialisée à 1 avant le début de la fenêtre temporelle, puis, pendant la durée d'ouverture de cette fenêtre, se maintient à 1 lorsque le signal de données présente effectivement une suite alternée de bits 1 et 0. Après quoi cette bascule est verrouillée dans son état, et fournit par sa sortie le signal de reconnaissance de données autorisant le transfert des données de la sortie du démodulateur vers le démultiplexeur.

Lorsque durant l'ouverture de la fenêtre temporelle, la suite de bits de données n'est pas régulièrement alternée, la sortie de la porte OU exclusif transmet un 0 à la bascule de contrôle, qui est alors verrouillée dans cet état et, lors de la fermeture de la fenêtre, cet état est utilisé pour interdire le transfert des données vers le démultiplexeur.

Selon un deuxième mode de mise en oeuvre de l'invention le dispositif de réception se caractérise en ce que le générateur de fenêtre temporelle fournisant un signal d'ouverture d'une durée prédéterminée et positionnée à l'intérieur des limites de la salve de synchronisation de bits, le module de contrôle synchrone comporte deux bascules D de contrôle en cascade, toutes deux initialisés à un premier état avant l'ouverture de la fenêtre temporelle, en ce que la première bascule D de contrôle est autoverrouillée dans l'état opposé dudit premier état dès l'apparition d'un premier état bas en sortie de la porte OU exclusif survenant pendant l'ouverture de la fenêtre temporelle tandis que la deuxième bascule D de contrôle est autoverrouillée dans son état opposé au cas où se produit un deuxième état bas en sortie de la porte OU exclusif, pendant l'ouverture de la fenêtre temporelle, le signal de sortie de la deuxième bascule D de contrôle étant prélevé lors de la fermeture de ladite fenêtre en tant que signal de reconnaissance de début de paquet.

Ce mode de mise en oeuvre s'apparente au premier mode mais tolère cependant une erreur d'identification durant le délai d'ouverture de la fenêtre temporelle ce qui optimise le résultat dans le cas d'une réception présentant des signaux parasites ou un niveau important de bruit. En effet, la deuxième bascule D de contrôle ne se trouve verrouillée à 0 qu'à la suite d'un deuxième passage synchrone à 0 de la sortie de la porte OU exclusif, le premier passage à 0 de cette sortie ne verrouillant que la première bascule D de contrôle. On diminue ainsi le risque de rejeter à tort une ligne de données numériques à cause de la présence d'un bit erronné dans le signal de synchronisation de bits reçu pendant l'ouverture de la fenêtre temporelle.

Selon un troisième mode de mise en oeuvre, le dispositif de réception est caractérisé en ce que le générateur de fenêtre temporelle fournissant un signal d'ouverture d'une durée prédéterminée et positionnée de manière relativement large par rapport à la salve de synchronisation de bits, le module de contrôle synchrone comporte une chaîne de comptage de bits identifiés à la sortie de la porte OU exclusif, chaîne de comptage qui est programmée pour le comptage d'un nombre déterminé m, inférieur au nombre n de bits de la salve de synchronisation de bits, dont le comptage est réinitialisé à chaque passage synchrone à l'état bas de son entrée de comptage et dont la sortie fournit le signal de reconnaissance de début de paquet, qui est auto-verrouillé, lorsque le comptage à m a été atteint.

En choisissant une fenêtre temporelle relativement large par rapport aux positions possibles du signal de synchronisation de bits c'est-à-dire une fenêtre qui peut s'étendre au delà des limites du signal de synchronisation, on s'affranchit dans ce cas de l'éffet dû aux variations du délai qui sépare le signal de synchronisation de ligne du début du signal de données.

Des variations non négligeables sont en effet à prévoir selon la norme d'émission de certains systèmes.

La fenêtre temporelle dans ce cas n'exige pas une précision de positionnement très élevée et peut avantageusement s'ouvrir quelque temps avant le début de la salve de synchronisation de bits et se refermer quelques temps après la fin de cette salve. En effet, la chaîne de comptage du module de contrôle synchrone réinitialisera son compteur tant que la suite régulière et alternée de bits de données n'aura pas débuté et fournira soit un signal de validation si le nombre prévu de bits à 1 en sortie de la porte OU exclusif a été totalisé, soit un signal d'interdiction si ce nombre n'a pas été atteint. Le signal d'ouverture (ou de fermeture) de la fenêtre temporelle peut être utilisé, si on le désire, pour bloquer le comptage pour la durée du reste de la ligne, et accroître ainsi la sécurité de l'identification qui n'a d'objet que pendant la transmission de la salve de synchronisation de bits.

Avantageusement, le générateur de fenêtre temporelle est réalisé au moyen d'une chaîne de comptage qui compte un premier nombre déterminé d'impulsions de l'horloge de données à partir du signal de synchronisation de ligne, qui fournit alors le signal d'ouverture de la fenêtre, puis compte un deuxième nombre déterminé d'impulsions d'horloge de données correspondant à la durée d'ouverture de la fenêtre, et, après quoi, fournit un signal de fermeture de la fenêtre.

Il est ainsi très facile d'optimiser le processus d'identification en modifiant les nombres de comptage et en observant les résultats obtenus dans différentes circonstances de réception et en particulier en présence d'un bruit élevé.

Cette souplesse d'adaptation est également avantageuse dans le cas d'un dispositif de réception multistandards où il suffit alors de programmer le chargement des nombres de comptage les plus appropriés pour la réception d'une émission dans un standard d'émission donné.

La description qui va suivre en regard des dessins annexés fera bien comprendre comment l'invention peut être réalisée.

La figure 1 représente un diagramme synoptique général d'un récepteur de données numériques connu.

La figure 2 donne un circuit de reconnaissance de données équipant le récepteur de données selon l'invention.

La figure 3 représente un schéma logique plus détaillé d'une partie du circuit de la figure 2, selon un premier mode de réalisation.

La figure 4 montre un chronogramme de plusieurs signaux qui sont présentés à l'entrée du circuit de la figure 3 ou qui sont produits en différents points de ce circuit.

La figure 5 représente le schéma logique d'un deuxième mode de réalisation d'une partie du circuit de la figure 2.

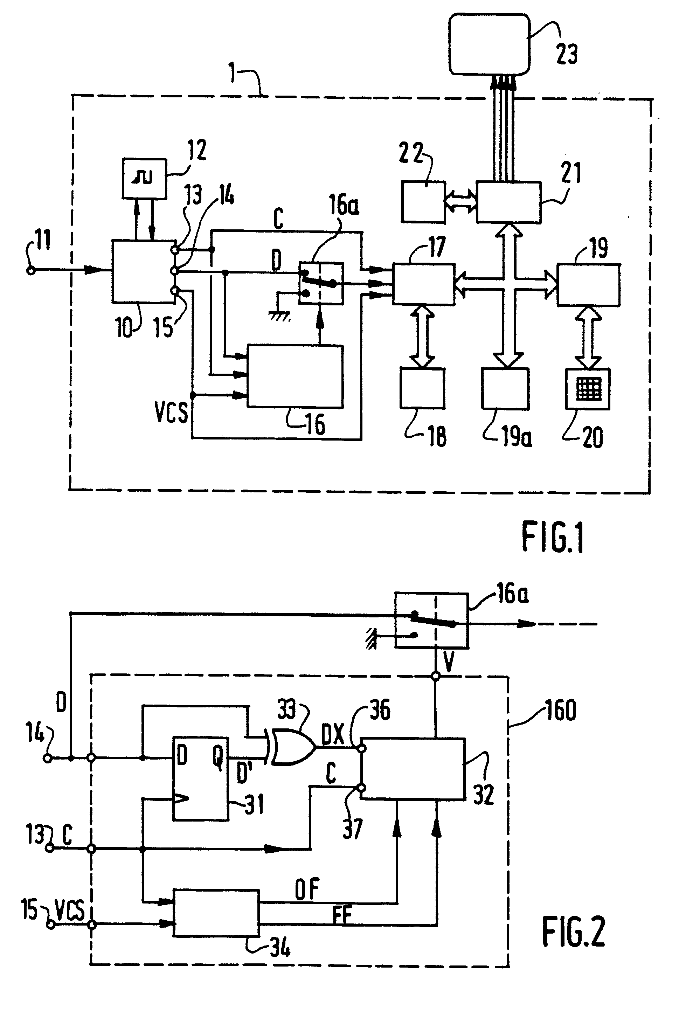

La figure 1 représente le schéma général d'un dispositif de réception 1 de données numériques. Il comporte un démodulateur 10 auquel est appliqué le signal provenant des étages haute fréquence et fréquence intermédiaire du récepteur par la borne d'entrée 11. Le démodulateur 10 est muni d'une horloge de données 12 synchronisable au moyen d'une salve de synchronisation de bits présente au début de chaque paquet de données après le signal de synchronisation de ligne. le démodulateur 10 délivre en sortie par une borne 13 un signal d'horloge C, par une borne 14, un signal de données D et par une borne 15 un signal d'initialisation VCS correspondant essentiellement à l'inverse logique du signal analogique de synchronisation de ligne et mis en phase avec le signal d'horloge C.

Le signal de données D, est transmis vers une entrée d'un démultiplexeur 17 via un dispositif interrupteur 16a qui est commandé par un circuit de reconnaissance de données 16. Le démultiplexeur 17 reçoit également sur deux autres entrées, respectivement le signal d'horloge C et le signal d'initialisation VCS.

Le circuit de reconnaissance de données 16 reçoit en entrée le signal d'horloge C, le signal de données D et le signal d'initialisation VCS.

Le dispositif de réception 1 comporte encore les moyens nécessaires pour mémoriser les données et les exploiter, par exemple pour les convertir en caractéres affichables sur un écran. Ces moyens comprennent essentiellement une mémoire tampon 18 associée au démultiplexeur 17, un microprocesseur de gestion 19 muni d'une mémoire de travail 19a qui reçoit les données traitées, à la sortie du démultiplexeur 17, un clavier 20 raccordé par un bus au microprocesseur de gestion 19 et un vidéo-processeur 21 auquel est associée une mémoire d'écran 22, l'ensemble fournissant dans l'exemple représenté, les signaux nécessaires pour visualiser des informations sur un écran 23.

Le circuit de reconnaissance de données 16 est conçu de telle sorte qu'il commande le circuit interrupteur 16a du côté passant lorsqu'une salve de synchronisation de bits est présentée à la borne d'entrée 11. Lorsqu'il s'agit au contraire d'une ligne de télévision comportant un signal vidéo analogique, le circuit de reconnaissance de données 16 n'autorise pas le transfert du signal de données D vers le démultiplexeur 17 en commandant le circuit interrupteur 16a du côté inactif.

La structure générale du dispositif de réception 1, ainsi décrite, est typique de l'état de l'art, notamment du document FR-A-2 496 376.

La figure 2 représente un schéma de base pour la réalisation d'un circuit de reconnaissance de données 160 de fonction comparable au circuit 16 de la figure 1, dans un dispositif de réception de données conforme à l'invention. Ce circuit 160 comporte une bascule D dite bascule D de retardement 31, un module de contrôle synchrone 32, une porte OU exclusif 33 interposée entre la bascule D de retardement 31 et le module de contrôle synchrone 32, et enfin un générateur de fenêtre temporelle 34. Le signal d'horloge C est appliqué à l'entrée d'horloge de la bascule D de retardement 31, à une entrée 37 du module de contrôle synchrone 32 ainsi qu'à une entrée du générateur de fenêtre temporelle 34. Le signal de données D est appliqué d'une part à l'entrée de données de la bascule D de retardement 31 et d'autre part à l'une des entrées de la porte OU exclusif 33. Sur l'autre entrée de cette porte, est appliqué le signal D′ de sortie de la bascule D de retardement 31, tandis que le signal DX de sortie de la porte OU exclusif 33 est appliqué à une entrée 36 du module de contrôle synchrone 32.

Ce dernier module 32 fournit en sortie un signal V de reconnaissance de début de paquet commandant le circuit interrupteur 16a. Le module de contrôle synchrone 32 reçoit encore un signal d'ouverture de fenêtre OF et éventuellement un signal de fin de fenêtre FF, tous deux issus du générateur de fenêtre temporelle 34 et obtenus par comptages des impulsions du signal d'horloge C à partir d'un moment fixé par le signal d'initialisation VCS.

Pendant la réception de la salve de synchronisation de bits le signal de données D doit normalement faire apparaître une succession régulière d'états alternés 1 et 0. Dans ces conditions, la sortie de la porte OU exclusif 33 fournit un signal DX qui est toujours à 1 à chaque passage de l'impulsion d'horloge. Si au contraire le signal de données D comportait deux états successifs identiques, la porte OU exclusif 33 fournirait un signal DX à 0, ce qui est alors l'indication d'une erreur d'alternance dans la succession des bits reçus. Pendant le temps d'ouverture de la fenêtre temporelle, temps qui est défini par le signal OF (ou l'ensemble des signaux OF et FF), le module de contrôle synchrone 32 mémorise une suite d'états successifs de son entrée 36 et fournit un signal V qui est à 1 (par exemple) lorsque cette suite d'états successifs ne contient que des états 1, cas pour lequel le signal V autorise le transfert du signal de données à travers le circuit interrupteur 16a pour la durée d'une ligne.

Ainsi qu'il sera décrit plus en détail dans la suite de cet exposé, on peut aussi prévoir que le signal V autorise le transfert du signal de données D dans le cas où il ne se présente pas plus d'un bit d'erreur, isolé, dans la suite des états successifs du signal DX de sortie de la porte OU exclusif 33.

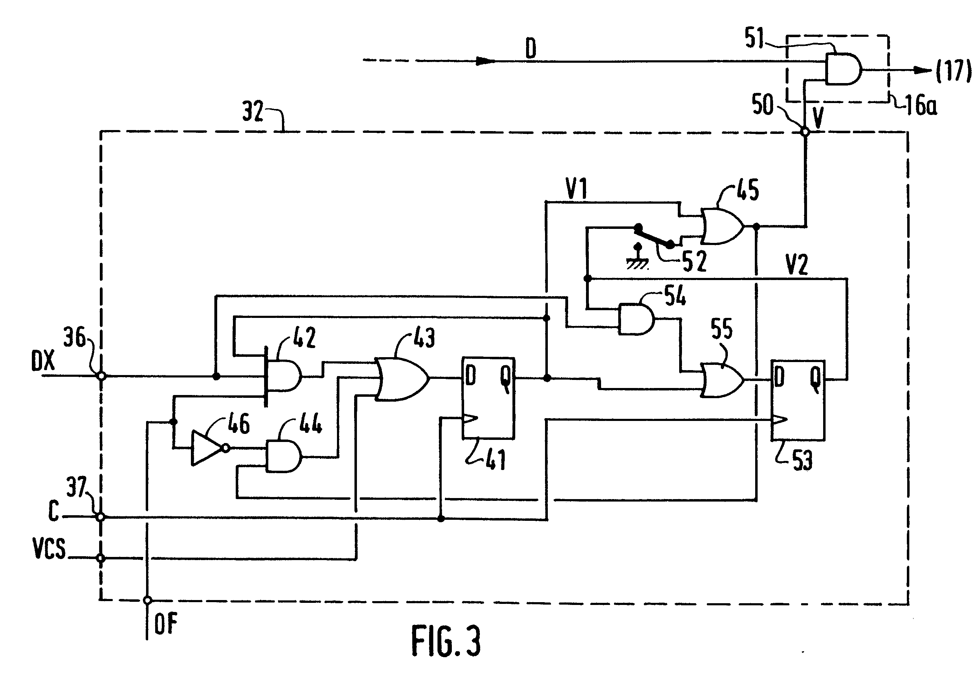

La figure 3 montre un premier exemple de réalisation du module de contrôle 32 de la figure 2, ainsi que sa liaison avec le circuit interrupteur 16a. Il comporte une première bascule D dite bascule D de contrôle 41 dont l'entrée d'horloge reçoit le signal d'horloge C de la borne 37, et qui reçoit par la borne 36 le signal DX de sortie de la porte OU exclussif 33, à travers, successivement : une porte ET à trois entrées 42 et une porte OU à trois entrées 43. Le signal de sortie de la première bascule D de contrôle 41 appelé V1 est forcé à l'état 1 par le signal d'initialisation VCS qui dure plusieurs impulsions d'horloge et qui est transmis par l'intermédiaire de la porte OU 43 du fait que ce signal est appliqué sur l'une des trois entrées de cette porte.

Le signal d'ouverture de fenêtre OF passe à l'état 1 alors que la salve de synchronisation de bit est déjà commencée. Il est appliqué sur l'une des entrées de la porte ET 42. Du fait que le signal V1 en sortie de la première bascule D de contrôle 41 est appliqué sur une entrée de la porte ET 42 cette première bascule D de contrôle 41 est auto-verrouillée au cas ou se produit un premier état bas du signal DX de sortie de la porte OU exclusif 33.

Pendant la période qui précède l'ouverture de la fenêtre, et après que le signal d'initialisation VCS soit tombé à zéro, la première bascule D de contrôle 41 a sa sortie maintenue à 1 du fait que le signal V1 est transmis par une porte OU 45 à une porte ET 44 à deux entrées dont l'autre entrée reçoit le signal inversé d'ouverture de fenêtre OF par l'inverseur 46, la sortie de la porte ET 44 étant ramenée à l'entrée de la première bascule D de contrôle 41 par l'intermédiaire de la porte OU 43.

Pendant la durée d'ouverture de la fenêtre, la première bascule D de contrôle 41 se trouvera auto-verrouillée à zéro dès que le signal DX passera par un premier état bas et du fait que cet état bas transmis en sortie de la bascule 41 est ramené à une entrée de la porte ET 42.

Lorsque la fenêtre temporelle se referme le signal d'ouverture de fenêtre OF repasse à l'état zéro. L'état de la première bascule D de contrôle 41 se trouve mémorisé par la liaison appliquant son signal de sortie V1 à travers la porte OU 45 vers l'entrée de la porte ET 44 tandis que sur l'autre entrée de la même porte se trouve appliqué un signal à l'état 1 au moyen de l'inverseur 46.

Le signal V1 ainsi mémorisé est finalement prélevé à la borne de sortie 50 en tant que signal de reconnaissance V de début de paquet. Selon l'exemple représenté à la figure 3, le circuit interrupteur 16A est simplement contitué d'une porte ET 51 qui reçoit sur l'une de ses entrées le signal V et sur l'autre, le signal de données D qui est transmis vers le démultiplexeur 17 tant que le signal de reconnaissance V ne prend pas la valeur zéro. Si le signal V est à 1 au moment de la fermeture de la fenêtre, cette transmission se poursuivra pour le temps restant de la durée de la ligne.

La partie décrite jusqu'ici, du bloc de contrôle synchrone 32 fonctionne en bloquant le signal de données D dès le premier passage à zéro du signal DX de sortie de la porte OU exclusif 33. Selon ce mode de fonctionnement, l'interrupteur 52 est positionné dans sa position inactive c'est-à-dire de liaison à la masse.

Lorsque l'interrupteur 52 est dans sa position active, le module de contrôle synchrone 32, peut encore fonctionner selon un deuxième mode au moyen d'une deuxième bascule D de contrôle 53 autoverrouillée à zéro du fait que son signal de sortie V2 est rebouclé sur son entrée à travers la porte ET 54 et la porte OU 55.

La seconde bascule D de contrôle 53 est d'abord positionnée à 1 de la même manière que la première bascule D de contrôle 41 du fait qu'elle reçoit de celle-ci à travers la porte OU 55 un signal de sortie V1 positionné à 1.

Du fait que le signal V1 est décalé d'une période d'horloge du signal DX au premier passage à 0 du signal DX celui-ci n'est pas transmis immédiatement à la deuxième bascule D de contrôle 53.

Cependant la première bascule D de contrôle 41 se verrouille alors à 0. S'il survient un deuxième état 0 du signal DX, pendant la durée de l'ouverture de la fenêtre, la porte ET 54 fait apparaître en sortie un zéro et la deuxième bascule D de contrôle 53 se verrouille alors dans cet état. Au moyen de l'interrupteur 52 et de la porte OU 45 on peut donc sélectionner soit le mode de verrouillage à 0 du signal V dès la première erreur constatée dans le signal DX ou encore seulement à la deuxième erreur se produisant dans ce signal.

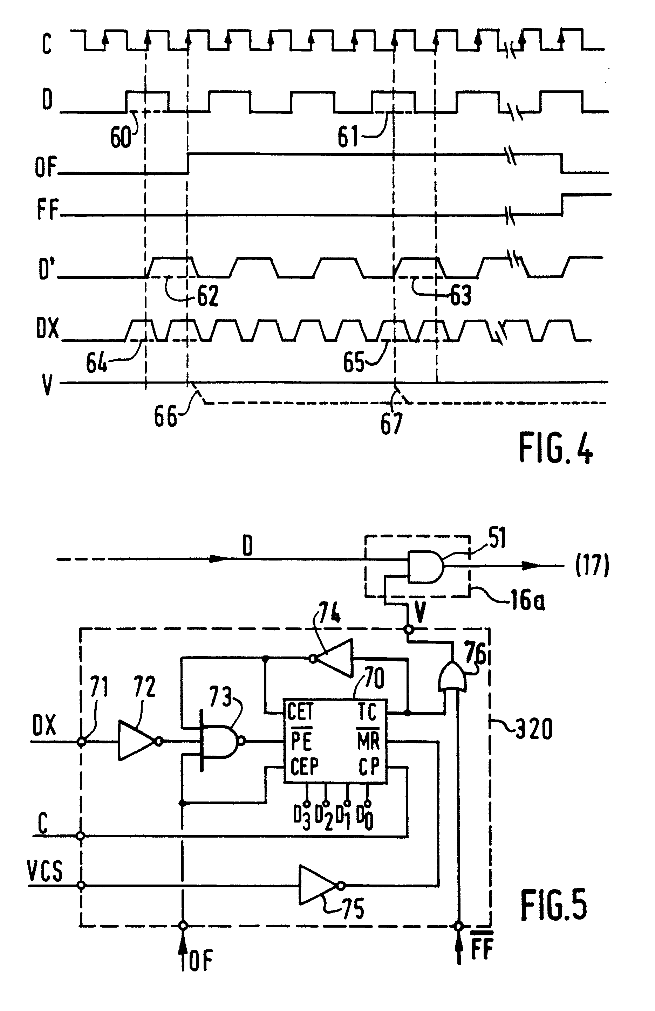

La figure 4 représente un chronogramme du signal d'horloge C, du signal de données D, du signal d'ouverture de fenêtre OF, du signal de fin de fenêtre FF, du signal de données décalé D′ à la sortie de la bascule D de retardement 31, du signal DX de sortie de la porte OU exclusif 33 et du signal V de reconnaissance du début de paquet.

Comme il a déjà été indiqué le signal d'ouverture de fenêtre OF se présente à l'intérieur des limites fixées pour la durée de la salve de synchronisation de bit. Il passe à 1 pendant la durée de l'ouverture de la fenêtre temporelle.

Le signal de fin de fenêtre FF, initialement à 0 passe à 1 au moment de la fermeture de la fenêtre. Dans le signal de données D on a représenté en pointillés deux bits 60 et 61 correspondant chacun à une erreur du signal de données du fait qu'il ne correspond pas à l'alternance régulière prévue pour la réception normale du signal de synchronisation de ligne. Le signal normalement attendu, est celui indiqué en trait plein.

Le signal D′ c'est-à-dire le signal de données décalé dans le temps par la bascule D de retardement 31 présente les mêmes signaux d'erreur décalés dans le temps respectivement en 62 et 63 comme indiqué en pointillé. A la sortie de la porte OU exclusif 33, le signal DX est représenté en traits pleins lorsque le signal de données D ne comporte pas d'erreur et comporte le signal en pointillés 64 et 65 en présence des erreurs indiquées en 60 et 61 dans le signal D.

Lorsque le signal de données D, présente une suite régulière et alternée de bits 1 et 0 le signal DX est à 1 au moment des fronts montants du signal d'horloge C. Comme conséquence du bit d'erreur indiqué en 60, pour le signal de données D, le signal DX présente un niveau bas tel qu'indiqué en pointillés 64. De même en est-il pour le bit d'erreur indiqué en 61 dans le signal de données D provoquant l'état bas indiqué en pointillé en 65 pour le signal DX.

Le signal de reconnaissance de début de paquet V a été initialisé à 1 par le signal d'initialisation VCS et est maintenu dans cet état par l'état bas du signal d'ouverture de fenêtres OF au moyen de l'inverseur 46, de la porte ET 44 et de la porte OU 43 (fig. 3).

A partir de l'ouverture de la fenêtre temporelle la première bascule D de contrôle 41 est autoverrouillée à zéro dès la première erreur survenant dans le signal de données D. Lorsque le montage de la figure 3 est utilisé avec verrouillage des données dès la première erreur du signal de données, c'est-à-dire avec l'interrupteur 52 dirigé vers la masse, le signal V passe donc à l'état bas comme indiqué en 66 c'est-à-dire dès le premier état bas constaté dans le signal DX. Lorsque l'interrupteur 52 est placé dans sa position active et que le montage de la figure 3 fonctionnne en tolérant une erreur dans le signal de données D, le signal de reconnaissance V de début de paquet passe à l'état bas seulement au passage de la deuxième erreur c'est-à-dire celle correspondant à l'erreur 61 du signal de données D et au signal 65 à l'état bas du signal DX. Le signal de reconnaissance V de début de paquet passe donc seulement à l'état bas comme indiqué en pointillé en 67.

Si le signal de données D ne comporte aucune erreur dans l'alternance de bit 1 et 0, le signal de reconnaissance V de début de paquet reste à 1 et cette valeur est mémorisée à la fin de la fenêtre temporelle.

On remarque que dans le mode de réalisation qui vient d'être décrit, le signal de fin de fenêtre FF n'est pas utilisé. Selon une variante non représentée sur la figure, on pourrait combiner le signal de sortie de la porte OU 45 (signal V1 ou signal V2 selon la position de l'interrupteur 52) avec le signal de fin de fenêtre FF, à l'entrée d'une porte ET supplémentaire dont la sortie fournirait un signal de reconnaissance V. Selon cette variante, le signal V passerait à l'état 1 pour l'autorisation de transfert des données seulement à partir de la fermeture de la fenêtre temporelle.

On se reporte maintenant à la figure 5 qui représente un autre mode de mise en oeuvre pour le module de contrôle synchrone 32 de la figure 2. Ici le module de contrôle 320 consiste essentiellement en une chaîne de comptage comportant un compteur 70 qui décompte un nombre prédéterminé, par exemple le nombre 8, programmé sur ses entrées de prépositionnement D0 à D3. La borne 71 qui reçoit le signal DX de sortie de la porte OU exclusif 33 constitue l'entrée de comptage de la chaîne de comptage. La borne 71 est reliée à la borne d'initialisation du comptage $\overline{PE}$ active à l'état bas, du compteur 70 via un inverseur 72 et une porte NON-ET 73 à trois entrées. Une autre entrée de la porte NON-ET 73 est connectée à la borne d'autorisation de comptage CET du compteur 70 et reçoit le signal de fin de comptage de la borne de fin de comptage TC du compteur 70 via un inverseur 74. La troisième entrée de la porte NON-ET 73 reçoit le signal d'ouverture de fenêtre OF et est également reliée à la deuxième borne d'autorisation de comptage CEP du compteur 70. Le signal d'horloge C est appliqué à la borne du signal d'horloge CP du compteur 70 qui est un compteur synchrone et effectue le décomptage à chaque impulsion d'horloge lorsque les entrées d'autorisation de comptage CET et CEP sont toutes deux à l'état 1. La borne d'initialisation générale $\overline{MR}$ du compteur 70, active à l'état bas, reçoit le signal d'initialisation VCS via un inverseur 75.

Selon ce mode de mise en oeuvre, le signal d'ouverture de fenêtre OF est choisi de sorte qu'il commence avant la salve de synchronisation de bit et finit au moment de la fin de cette salve ou peu de temps après la fin de cette salve. Dans ces conditions, lorsque le signal d'ouverture de fenêtre OF passe à l'état 1, le compteur 70 est rechargé à son compte initial à chaque passage à zéro du signal DX puisque son signal de fin de comptage est encore à zéro et qu'ainsi les trois entrées de la porte NON-ET 73 sont à l'état 1.

Lorsque dans le signal de données D apparaissent les bits successifs 1 et 0 de la salve de synchronisation de bit, le signal DX fait alors apparaître une succession d'état à 1 de sorte que le compteur 70 effectue le décomptage. Lorsque le signal DX fait apparaître une suite suffisante d'état 1 successif, le compteur 70 arrive à la fin de comptage et son signal de fin de comptage issu de la borne TC est prélevé à travers une porte OU 76 pour fournir le signal de reconnaissance V de début de paquet. L'autre entrée de la porte OU 76

reçoit un signal $\overline{FF}$ qui est l'inverse logique du signal de fin de fenêtre FF.

Si pendant le comptage une erreur d'identification survient représentée par la présence d'un état bas du signal DX, le compteur 70 est rechargé à son compte initial et recommence à décompter. Il arrivera en fin de comptage pour autant que le nombre d'états à 1 du signal DX soit encore suffisant. Si ne n'est pas le cas, comme lors de la réception d'une ligne de signal vidéo, au moment de la fermeture de la fenêtre, le signal $\overline{FF}$ passe à zéro et à sa suite le signal V fait de même. Le signal V sera alors verrouillé dans cet état pour le reste de la durée de la ligne.

Le signal de reconnaissance V de début de paquet est appliqué à la porte ET 51 du circuit interrupteur 16A et contrôle le transfert du signal de données D vers le démultiplexeur 17.

Il est bien entendu que les montages décrits à propos de la figure 3 et de la figure 5 ont été donnés à titre d'exemple non limitatifs et que d'autres modes de mise en oeuvre de l'invention peuvent s'en déduire par l'emploi de moyens logiques équivalents.

Le générateur de fenêtre temporelle tel que représenté en 34 à la figure 2 ne nécessite pas de description détaillée. Il est avantageusement réalisé au moyen d'une chaîne de comptage qui compte un premier nombre déterminé d'impulsions de l'horloge de données à partir du signal de synchronisation de ligne, qui fournit à cet instant le signal d'ouverture de fenêtre OF, puis compte ensuite un deuxième nombre déterminé d'impulsions de l'horloge de données qui correspond à la durée d'ouverture de la fenêtre, il fournit alors un signal dit de fermeture de fenêtre FF, tandis qu'au même moment, le signal d'ouverture de fenêtre OF retourne à son état initial.

Le dispositif de réception de données numériques conforme à l'invention repose essentiellement sur un traitement numérique du signal de données. Il offre donc l'avantage d'une grande sécurité de fonctionnement en même temps que d'une grande souplesse de programmation des conditions d'exploitation.

## Revendications

1. Dispositif de réception de données numériques transmises sous forme de paquets multiplexés dans la voie vidéo d'une émission de télévision, qui comporte notamment un démodulateur muni d'une horloge de données synchronisable à la réception d'une salve de synchronisation de bits constituée d'une suite de n bits alternativement 1 et 0, présente au début de chaque paquet de données après un signal de synchronisation de ligne, un démultiplexeur auquel peuvent être transmis les signaux de données et les signaux de l'horloge de données provenant du démodulateur, ainsi que des moyens pour exploiter les données notamment en vue d'une visualisation sur un écran, dispositif dans lequel, en outre, un circuit de reconnaissance de données est prévu pour autoriser au moyen d'un signal de reconnaissance, le transfert des données numériques vers le démultiplexeur dans le cas où le début d'un paquet de données a été reconnu, caractérisé en ce que le circuit de reconnaissance de données comporte une bascule D dite de retardement, une porte OU exclusif, un générateur de fenêtre temporelle et un module de contrôle synchrone, en ce que le signal de données issu du démodulateur est appliqué d'une part à l'entrée de données de la bascule D de retardement et d'autre part à l'une des entrées de la porte OU exclusif, en ce que le signal de sortie de la bascule D de retardement est appliqué à l'autre entrée de la porte OU exclusif, et en ce que le signal de sortie de la porte OU exclusif est transmis à l'entrée du module de contrôle synchrone qui mémorise une suite d'états déterminés de son entrée pendant le temps d'ouverture de la fenêtre temporelle, et fournit à sa sortie le signal de reconnaissance de début de paquets lorsque ladite suite d'états successifs est essentiellement une suite d'états 1 (états hauts).

2. Dispositif selon la revendication 1, caractérisé en ce que le générateur de fenêtre temporelle fournissant un signal d'ouverture d'une durée prédéterminée et positionnée à l'intérieur des limites de la salve de synchronisation de bits, le module de contrôle synchrone comporte une bascule D, dite de contrôle, initialisée à un premier état avant l'ouverture de la fenêtre temporelle et autoverrouillée dans l'état opposé dudit premier état, dès l'apparition d'un état bas en sortie de la porte OU exclusif survenant pendant l'ouverture de la fenêtre temporelle, le signal de sortie de la bascule D de contrôle étant prélevé lors de la fermeture de ladite fenêtre en tant que signal de reconnaissance de début de paquet.

3. Dispositif selon la revendication 1, caractérisé en ce que le générateur de fenêtre temporelle fournisant un signal d'ouverture d'une durée prédéterminée et positionnée à l'intérieur des limites de la salve de synchronisation de bits, le module de contrôle synchrone comporte deux bascules D de contrôle en cascade, toutes deux initialisés à un premier état avant l'ouverture de la fenêtre temporelle, en ce que la première bascule D de contrôle est autoverrouillée dans l'état opposé dudit premier état dès l'apparition d'un premier état bas en sortie de la porte OU exclusif survenant pendant l'ouverture de la fenêtre temporelle tandis que la deuxième bascule D de contrôle est autoverrouillée dans son état opposé au cas où se produit un deuxième état bas en sortie de la porte OU exclusif, pendant l'ouverture de la fenêtre temporelle, le signal de sortie de la deuxième bascule D de contrôle étant prélevé lors de la fermeture de ladite fenêtre en tant que signal de reconnaissance de début de paquet.

4. Dispositif selon la revendication 1, caractérisé en ce que le générateur de fenêtre temporelle fournissant un signal d'ouverture d'une durée prédéterminée et positionnée de manière relativement large par rapport à la salve de synchronisation de bits, le module de contrôle synchrone comporte une chaîne de comptage de bits identifiés à la sortie de la porte OU exclusif, chaîne de comptage qui est programmée pour le comptage d'un nombre déterminé m, inférieur au nombre n de bits de la salve de synchronisation de bits, dont le comptage est réinitialisé à chaque passage synchrone à l'état bas de son entrée de comptage et dont la sortie fournit le signal de reconnaissance de début de paquet, qui est auto-verrouillé, lorsque le comptage à m a été atteint.

5. Dispositif selon l'une quelconque des revendications 1 à 4, caractérisé en ce que le générateur de fenêtre temporelle est réalisé au moyen d'une chaîne de comptage qui compte un premier nombre déterminé d'impulsions de l'horloge de données à partir du signal de synchronisation de ligne, qui fournit alors le signal d'ouverture de la fenêtre, puis compte un deuxième nombre déterminé d'impulsions d'horloge de données correspondant à la durée d'ouverture de la fenêtre, et, après quoi, fournit un signal de fermeture de la fenêtre.

## Claims

1. An arrangement for receiving numerical data transmitted in the form of multiplexed packets in the video channel of a television transmission system, particularly comprising a demodulator provided with a data clock which can be synchronized to the reception of a bit synchronizing burst constituted by a sequence of n bits of alternately 1 and 0 present at the start of each data packet after a line synchronizing signal, a demultiplexer to which the data signals and the data clock signals from the demodulator can be transmitted and means for handling the data to be visualized on a screen, in which arrangement, inter alia, a circuit for recognizing the data is provided for authorizing the transfer of the numerical data to the demultiplexer by means of a recognition signal if the start of a data packet has been recognized, characterized in that the data recognition circuit comprises a delay D flip-flop, an exclusive-OR gate, a time window generator and a synchronous control module, in that the data signal supplied by the demodulator is applied to the data input of the delay D flip-flop and to one of the inputs of the exclusive-OR gate, in that the output signal of the delay D flip-flop is applied to the other input of the exclusive-OR gate and in that the output signal of the exclusive-OR gate is transmitted to the input of the synchronous control module which memorizes a sequence of given states of its input during the opening period of the time window and which supplies from its output the signal for recognizing the start of the packets when said sequence of successive states is essentially sequence of "1" states (high states).

2. An arrangement as claimed in Claim 1, characterized in that the time window generator supplies an opening signal having a predetermined duration located within the limits of the bit synchronizing burst, while the synchronous control module comprises a control D flip-flop set to a first state before opening of the time window and being locked in a state opposed to said first state as soon as a low state at the output of the exclusive-OR gate occurs during opening of the time window, the output signal of the control D flip-flop being applied upon closure of said window as a signal for recognizing the start of the packet.

3. An arrangement as claimed in Claim 1, characterized in that the time window generator supplies an opening signal having a predetermined duration located within the limits of the bit synchronizing burst, while the synchronous control module comprises two control D flip-flops arranged in cascade which are both set to a first state before opening of the time window, in that the first control D flip-flop is locked in the state opposed to said first state as soon as a first low state at the output of the exclusive-OR gate occurs during opening of the time window, while the second control D flip-flop is locked in its state opposed to the case in which a second low state is produced ad the output of the exclusive-OR gate during opening of the time window, the output signal of the second control D flip-flop being applied during closure of said window as a signal for recognizing the start of the packet.

4. An arrangement as claimed in Claim 1, characterized in that, while the time window generator supplies an opening signal having a predetermined duration located in a relatively wide range with respect to the bit synchronizing burst, the synchronous control module comprises a counting circuit of bits identified at the output of the exclusive-OR gate, which counting series is programmed for counting a given nmber $m$ which is lower than the number $n$ of bits of the bit synchronizing burst, whose count is reset at each synchronous passage to the low state of its counting input and whose output supplies the signal for recognizing the start of the packet, which is locked when the count to $m$ has been reached.

5. An arrangement as claimed in any one of Claims 1 to 4, characterized in that the time window generator is realized by means of a counting circuit which counts a given first number of data clock pulses from the line synchronizing signal, which subsequently supplies the signal for opening the window, then counts a given second number of data clock pulses corresponding to the opening period of the window and subsequently supplies a signal for closing the window.

**Patentansprüche**

1. Anordnung zum Empfangen in Form gebündelter Pakete übertragener digitaler Daten über den Video-Kanal eines Fernsehübertragungssystems, insbesondere mit einem Demodulator mit einem Datentaktgenerator, der zu dem Empfang eines durch eine Folge von n Bits abwechselnd 1 und 0 gebildeten Bit-Synchronsignals synchronisiert werden kann, wobei diese Bits am Anfang jedes Datenpakets nach einem Zeilensynchronsignal vorhanden sind, mit einem Demultiplexer, zu dem die Datensignale und die Datentaktsignale vom Demodulator übertragen werden können, und mit Mitteln zum Verarbeiten der am Schirm sichtbar zu machenden Daten, wobei in dieser Anordnung weiterhin eine Schaltungsanordnung zum Wiedererkennen der Daten vogesehen ist, damit mittels eines Wiedererkennungssignals die Übertragung der digitalen Daten zu dem Demultiplexer genehmigt wird in dem Fall, wo der Anfang eines Datenpakets wiedererkannt wurde, dadurch gekennzeichnet, daß die Daten-Wiedererkennungsschaltung eine Verzögerungs-D-Flip-Flop-Schaltung, ein Exklusiv-ODER-Gatter, einen Zeitfenstergenerator sowie einen Synchronsteuermodul aufweist, daß das von dem Demodulator gelieferte Datensignal einerseits dem Dateneingang der Verzögerungs-D-Flip-Flop-Schaltung zugeführt wird und andererseits einem der Eingänge des Exklusiv-ODER-Gatters, daß das Ausgangssignal der Verzögerungs-D-Flip-Flop-Schaltung dem anderen Eingang des Exklusiv-ODER-Gatters zugeführt wird und das Ausgangssignal des Exklusiv-ODER-Gatters dem Eingang des Synchronsteuermoduls zugeführt wird, der eine Folge ermittelter Zustande des Eingangs während der Öffnungsperiode des Zeitfensters speichert und am Ausgang das Signal zur Wiedererkennung des Anfangs des Pakets liefert, wenn die genannte Folge aufeinanderfolgender Zustände im wesentlichen eine Folge der 1-Zustände (Hoch-Zustände) ist.

2. Schaltungsanordnung nach Anspruch 1, dadurch gekennzeichnet, daß der Zeitfenstergenerator ein Öffnungssignal mit einer vorbestimmten Dauer liefert, das innerhalb der Grenzen des Bit-Synchronsignals liegt, während der Synchronsteuermodul eine vor dem Öffnen des Zeitfensters in einen ersten Zustand gesetzte und, sobald ein niedriger Zustand an dem Ausgang des Exklusiv-ODER-Gatters während der Öffnung des Zeitfensters auftritt, in einem dem ersten genannten Zustand entgegengesetzten Zustand verriegelte Steuer-D-Flip-Flop-Schaltung aufweist, wobei das Ausgangssignal der Steuer-D-Flip-Flop-Schaltung beim Schließen des genannten Zeitfensters als ein Signal zum Wiedererkennen des Anfangs des Pakets geliefert wird.

3. Schaltungsanordnung nach Anspruch 1, dadurch gekennzeichnet, daß der Zeitfenstergenerator ein innerhalb der Grenzen des Bit-Synchronsignals liegendes Öffnungssignal erzeugt mit einer vorbestimmten Dauer, während der Synchronsteuermodul zwei reihengeschaltete Steuer-D-Flip-Flop-Schaltungen aufweist, die vor der Öffnung des Zeitfensters beide in einen ersten Zustand gesetzt sind, daß die erste Steuer-D-Flip-Flop-Schaltung in dem dem genannten ersten Zustand entgegengesetzten Zustand verriegelt wird, sobald während der Öffnung des Zeitfensters ein erster niedriger Zustand an dem Ausgang des Exklusiv-ODER-Gatters auftritt, während die zweite Steuer-D-Flip-Flop-Schaltung in demjenigen Zustand verriegelt wird, der entgegengesetzt ist zu dem Fall, in dem am Ausgang des Exklusiv-ODER-Gatters während der Öffnung des Zeitfensters ein zweiter niedriger Zustand erzeugt wird, wobei das Ausgangssignal der zweiten Steuer-D-Flip-Flop-Schaltung während des geschlossenen Zustandes des genannten Fensters als Signal zum Wiedererkennen des Anfangs des Pakets zugeführt wird.

4. Schaltungsanordnung nach Anspruch 1, dadurch gekennzeichnet, daß der Zeitfenstergenerator ein innerhalb eines gegenüber dem Bit-Synchronsignal breiten Bereiches liegendes Öffnungssignal erzeugt mit einer vorbestimmten Dauer, wobei der Synchronsteuermodul eine Zählerkette aufweist zum Zählen von Bits, die am Ausgang des Exklusiv-ODER-Gatters erkannt worden sind, wobei diese Zählerkette programmiert ist zum Zählen einer bestimmten Zahl m, die niedriger ist als die Zahl n von Bits des Bit-Synchronsignals, wobei die Zählstellung bei jedem synchronen Durchgang im niedrigen Zustand des Zählereingangs neu ausgelöst wird und wobei der Ausgang das Signal zum Wiedererkennen des Anfangs des Pakets liefert, das verriegelt wird, wenn die Zählung bis m erreicht worden ist.

5. Schaltungsanordnung nach einem der Ansprüche 1 bis 4, dadurch gekennzeichnet, daß der Zeitfenstergenerator mittels einer Zählerkette ausgebildet ist, die eine bestimmte erste Anzahl Datentaktimpulse des Zeilensynchronsignals zählt, danach das Fensteröffnungssignal liefert, dann eine zweite bestimmte Anzahl Datentaktimpulse entsprechend der Öffnungsdauer des Fensters zählt und zum Schluß ein Fensterschließsignal liefert.

FIG.1

FIG.2

12

FIG.3

EP 0 275 597 B1

FIG.4

FIG.5